# EUROPÄISCHE PATENTSCHRIFT

(11) **EP 3 913 271 B1**
(45) Veröffentlichungstag und Bekanntmachung des Hinweises auf die Patenterteilung: **22.02.2023**
(21) Anmeldenummer: 20175417.3
(22) Anmeldetag: 19.05.2020
(51) Int. Cl.: F16L 37/088

(54) **VERBINDER**
CONNECTOR
CONNECTEUR

(43) Veröffentlichungstag der Anmeldung: 24.11.2021
(73) Patentinhaber: TI Automotive (Fuldabrück) GmbH, 34277 Fuldabrück (DE)
(72) Erfinder: Barthel, Iris, 34270 Schauenburg (DE); Bube, Kay, 36277 Schenklengsfeld (DE); Knobloch, Harald, 69121 Heidelberg (DE); Rohde, Reiner, 34323 Malsfeld (DE); Lim, Jeong-Ho, 104-703 Incheon (KR); Lee, Dong-Hyeok, 101-1007 Gyeonggi-do (KR); Eom, Sung-Yong, 107-1006 Incheon (KR); Choo, Seong-Hwa, 106-1102 Incheon (KR)
(74) Vertreter: Andrejewski - Honke Patent- und Rechtsanwälte Partnerschaft mbB

(56) Entgegenhaltungen:
- EP-A1- 1 770 321
- EP-B1- 1 770 321
- WO-A1-2019/036233
- DE-A1-102019 204 343

## Beschreibung

Die Erfindung betrifft einen Verbinder zum Verbinden zweier fluidführender Elemente, insbesondere zum Verbinden von zwei Kraftfahrzeugrohrleitungen, - mit einem weiblichen Steckteil und einem in das weibliche Steckteil einsteckbaren männlichen Steckteil, wobei das männliche Steckteil über zumindest einen an dem weiblichen Steckteil angeschlossenen Rückhalter im eingesteckten Zustand an dem weiblichen Steckteil fixierbar ist. - Grundsätzlich kann der erfindungsgemäße Verbinder unterschiedliche Ausgestaltungen aufweisen und es kann sich dabei insbesondere um sogenannte VDA-Verbinder handeln oder aber auch um sogenannte SAE-Verbinder. Es liegt im Rahmen der Erfindung, dass es sich bei dem erfindungsgemäßen Verbinder um einen Schnellverbinder bzw. Quick-Connector handelt.

Verbinder der vorstehend beschriebenen Art sind aus der Praxis in unterschiedlichen Ausgestaltungen bekannt. Vor allem wenn diese Verbinder zum Verbinden von zwei Kraftfahrzeugrohrleitungen eingesetzt werden, muss eine korrekte und funktionssichere Verbindung zwischen dem männlichen Steckteil und dem weiblichen Steckteil gewährleistet sein. In diesem Zusammenhang gibt es nicht selten Probleme. Viele der bekannten Verbinder weisen den Nachteil auf, dass die korrekte und funktionssichere Verbindung zwischen männlichem und weiblichem Steckteil nicht ohne weiteres einfach feststellbar ist. Es existieren bereits verschiedene Detektionssysteme, die allesamt das Ziel verfolgen die korrekte Verbindung zwischen männlichem und weiblichem Steckteil eindeutig anzuzeigen. Viele dieser bekannten Detektionsmaßnahmen sind aber nur mit relativ hohem Aufwand bzw. hohem Fertigungsaufwand realisierbar. So ist es beispielsweise bekannt, verhältnismäßig aufwendige elektrische Detektionskomponenten einzusetzen. Insoweit besteht Verbesserungsbedarf.

Aus DE 10 2019 204 343 A1 ist eine Fluidverbindungsvorrichtung mit einem männlichen Steckteil und einem weiblichen Steckteil bekannt. Hier ist auch ein Rückhalter zur Fixierung des männlichen Steckteils an dem weiblichen Steckteil vorhanden. Es wird das Problem der Detektion einer korrekten Verbindung von männlichem Steckteil und weiblichem Steckteil angesprochen. Im ordnungsgemäß eingesteckten Zustand des männlichen Steckteils muss ein Ring von einer Bedienungsperson in eine Verriegelungsposition bewegt werden. Diese aktive Verriegelung durch die Bedienungsperson gewährleistet die ordnungsgemäße Verbindung von männlichem Steckteil und weiblichem Steckteil. Von einer optischen Detektion wird hier abgeraten.

Weiterhin ist aus EP 1 770 321 A1 ein Verbinder mit einem männlichen Steckteil und einem weiblichen Steckteil bekannt. Ein Rückhalter ist vorgesehen, der eine sichere Verbindung zwischen dem männlichen und dem weiblichen Steckteil gewährleisten soll. Außerdem ist ein Indikatorelement vorhanden, dass beim Einstecken des männlichen Steckteils in das weibliche Steckteil aus dem Aggregat herausgeschoben wird. Dabei wirkt das männliche Steckteil mit einem an seiner Außenoberfläche vorhandenen umlaufenden Wulst auf das Indikatorelement. Diese Maßnahmen haben sich nicht bewährt.

Der Erfindung liegt das technische Problem zugrunde, einen Verbinder der eingangs beschriebenen Art anzugeben, bei dem die korrekte Verbindung zwischen dem männlichen Steckteil und dem weiblichen Steckteil eindeutig und funktionssicher angezeigt werden kann und bei dem die Detektionsmaßnahmen auf einfache und wenig aufwändige Weise realisierbar sind.

Zur Lösung dieses technischen Problems lehrt die Erfindung einen Verbinder zum Verbinden zweier fluidführender Elemente, insbesondere zum Verbinden von zwei Kraftfahrzeugrohrleitungen, - mit einem weiblichen Steckteil und einem in das weibliche Steckteil einsteckbaren männlichen Steckteil, wobei das männliche Steckteil über zumindest einen an dem weiblichen Steckteil angeschlossenen Rückhalter im eingesteckten Zustand an dem weiblichen Steckteil fixierbar ist, wobei zumindest ein Indikatorelement vorgesehen ist, das den über das Fixierelement erreichten ordnungsgemäß bzw. vollständig fixierten Zustand des männlichen Steckteil an dem weiblichen Steckteil anzeigt, wobei das Indikatorelement beim Einstecken des männlichen Steckteils in das weibliche Steckteil über eine an der Außenoberfläche des männlichen Steckteils vorgesehene und in axialer Richtung des männlichen Steckteils ansteigende Rampe gleitet und dabei in radialer Richtung nach außen verschoben wird, wobei das Indikatorelement in seiner radialen Außenposition um einen Indikatorabschnitt aus einer Indikatoröffnung des weiblichen Steckteils herausragt, wobei die radiale Außenposition des Indikatorelementes bzw. der aus der Indikatoröffnung des weiblichen Steckteils herausragende Indikatorabschnitt den ordnungsgemäß fixierten Zustand des männlichen Steckteils an dem weiblichen Steckteil anzeigt und wobei ein Indikatorelement zumindest zwei und vorzugsweise zwei Indikatorfüße aufweist, mit denen das Indikatorelement auf der ansteigenden Rampe gleitet, wobei die beiden Indikatorfüße jeweils an einem Indikatorschenkel des Indikatorelementes angeschlossen sind und wobei die Indikatorschenkel federnd an einer Indikatorbasis angeschlossen sind, so dass die Indikatorschenkel durch Krafteinwirkung aufeinander zu bzw. voneinander wegbewegt werden können. Es liegt im Rahmen der Erfindung, dass das Indikatorelement mittels des Bundes beim Einstecken des männlichen Steckteils in das weibliche Steckteil in radialer Richtung nach außen verschoben wird.

Gemäß bevorzugter Ausführungsform der Erfindung besteht das weibliche Steckteil und/oder das männliche Steckteil aus zumindest einem Kunststoff bzw. im Wesentlichen aus zumindest einem Kunststoff. Als Kunststoffe für das männliche Steckteil und/oder für das weibliche Steckteil kommen insbesondere Polyamide infrage oder aber auch Polyphenylensulfid (PPS). Grundsätzlich liegen auch andere Kunststoffe als Material für das männliche Steckteil und/oder das weibliche Steckteil im Rahmen der Erfindung, beispielsweise Polyolefine wie Polypropylen und/oder Polyurethane. Es ist auch möglich, dass das männliche Steckteil und das weibliche Steckteil aus unterschiedlichen Kunststoffen hergestellt sind.

Erfindungsgemäß ist an dem weiblichen Steckteil ein Rückhalter als Fixierelement angeschlossen, mit dem das männliche Steckteil im eingesteckten Zustand an dem weiblichen Steckteil fixierbar ist. Das weibliche Steckteil weist dazu zweckmäßigerweise zumindest eine Ausnehmung, bevorzugt zwei gegenüberliegende Ausnehmungen auf, die jeweils von dem Rückhalter durchgriffen wird/werden, so dass der Rückhalter auf das männliche Steckteil einwirken kann. Vorzugsweise hintergreift der Rückhalter im vollständig eingesteckten bzw. fixierten Zustand des männlichen Steckteils einen Anschlagflansch des männlichen Steckteils und der Rückhalter fasst sehr bevorzugt in eine Fixierungsnut des männlichen Steckteils ein. Zweckmäßigerweise besteht der Rückhalter aus einem Metall, insbesondere aus einem Metalldraht bzw. im Wesentlichen aus einem Metall, insbesondere aus einem Metalldraht. Es hat sich bewährt, dass der Rückhalter aus Stahl, insbesondere aus Stahldraht bzw. im Wesentlichen aus Stahl, insbesondere aus Stahldraht besteht. Grundsätzlich kann der Rückhalter aber auch aus Kunststoff bestehen.

Eine besonders bewährte Ausführungsform der Erfindung zeichnet sich dadurch aus, dass der Rückhalter U-förmig mit einem U-Bügel und zwei an dem U-Bügel angeschlossenen U-Schenkeln ausgebildet ist. Empfohlenermaßen weist das weibliche Steckteil zwei gegenüberliegende Ausnehmungen auf, die von dem U-Schenkeln des Rückhalters durchgriffen werden, so dass die U-Schenkel auf das männliche Steckteil einwirken können. Zweckmäßigerweise hintergreifen die U-Schenkel im fixierten Zustand des männlichen Steckteils an dem weiblichen Steckteil den Anschlagflansch des männlichen Steckteils und besonders bevorzugt greifen die U-Schenkel in eine Fixierungsnut des männlichen Steckteils ein. Es empfiehlt sich, dass die beiden U-Schenkel federelastisch an dem U-Bügel angeschlossen sind. - Es liegt im Rahmen der Erfindung, dass die beiden U-Schenkel des Rückhalters beim Einstecken des männlichen Steckteils in das weibliche Steckteil von einem an der Außenoberfläche des männlichen Steckteils angeordneten - zweckmäßigerweise umlaufenden - Bund bzw. Vorsprung, insbesondere von dem Anschlagflansch radial nach außen gedrückt werden um bei weiterem Einstecken des männlichen Steckteils in das weibliche Steckteil anschließend den umlaufenden Bund bzw. Vorsprung, insbesondere den Anschlagflansch des männlichen Steckteils zu hintergreifen. Dann ist das männliche Steckteil vollständig bzw. ordnungsgemäß an dem weiblichen Steckteil fixiert.

Es liegt im Rahmen der Erfindung, dass an dem männlichen Steckteil - vorzugsweise den Umfang des männlichen Steckteils vollständig umlaufend - ein Bund vorgesehen ist, dessen Seitenflächen sich im Wesentlichen vertikal bzw. rechtwinklig zur Oberfläche des männlichen Steckteils erstrecken. Zweckmäßigerweise wird der Bund des männlichen Steckteils im fixierten Zustand des männlichen Steckteils von dem Rückhalter hintergriffen und bildet somit den Anschlagflansch des männlichen Steckteils oder weist den Anschlagflansch des männlichen Steckteils auf.

Erfindungsgemäß gleitet das Indikatorelement beim Einstecken des männlichen Steckteils in das weibliche Steckteil über eine Rampe und wird dabei in radialer Richtung nach außen verschoben. Erfindungsgemäß ist diese Rampe an der Außenoberfläche des männlichen Steckteils vorgesehen und vorzugsweise ist die Rampe einstückig an dem männlichen Steckteil angeformt. Die Rampe steigt in axialer Richtung des männlichen Steckteils an und steigt vorzugsweise entgegen der Einsteckrichtung des männlichen Steckteils in das weibliche Steckteil an. Zweckmäßigerweise steigt die Rampe kontinuierlich und insbesondere stufenfrei an. Es hat sich bewährt, dass die Rampe um 15 bis 45°, vorzugsweise um 20 bis 35° ansteigt. Gemäß einer empfohlenen Ausführungsform der Erfindung läuft die Rampe um zumindest 50 %, insbesondere um zumindest 60 %, vorzugsweise um zumindest 75 % und bevorzugt um zumindest 90 % des Umfanges des männlichen Steckteils um. Eine ganz besonders bevorzugte Ausführungsform der Erfindung zeichnet sich dadurch aus, dass die Rampe vollständig über den Umfang des männlichen Steckteils umläuft.

Grundsätzlich kann es sich bei der erfindungsgemäßen Rampe um ein Bauteil bzw. um ein vorzugsweise einstückig an dem männlichen Steckteil angeformtes Bauteil handeln, das ansonsten keine Funktion im Zusammenhang mit der Verbindung zwischen den beiden Steckteilen erfüllt und lediglich für das erfindungsgemäße Indikatorelement vorgesehen ist. Nach einer bevorzugten Ausführungsform der Erfindung weist die Rampe den Anschlagflansch für den Rückhalter auf bzw. bildet die Rampe den Anschlagflansch für den Rückhalter. Diese Ausführungsform hat sich im Rahmen der Erfindung bewährt. Eine ganz besonders bevorzugte Ausführungsform der Erfindung ist dadurch gekennzeichnet, dass die Rampe mehrere Funktionen erfüllt, nämlich zum einen die Funktion des Vorsprunges der die U-Bügel des Rückhalters beim Einstecken des männlichen Steckteiles radial nach außen drückt und zum anderen die Funktion des Anschlagflansches, den die U-Bügel des Rückhalters bei weiterem Einschieben des männlichen Steckteils in das weibliche Steckteil hintergreifen und zudem die Funktion der Rampe für das Indikatorelement. Diese Ausführungsform hat sich im Rahmen der Erfindung ganz besonders bewährt.

Das erfindungsgemäße Indikatorelement besteht zweckmäßigerweise aus Kunststoff bzw. im Wesentlichen aus Kunststoff. Vorzugsweise handelt es sich bei dem Indikatorelement um ein einstückiges Element, bevorzugt um ein einstückiges Kunststoffelement. - Es liegt im Rahmen der Erfindung, dass das Indikatorelement an dem weiblichen Steckteil vorgesehen ist und vorzugsweise durchgreift das Indikatorelement eine Indikatoröffnung in der Wandung des weiblichen Steckteils. Gemäß einer empfohlenen Ausführungsform der Erfindung ist das Indikatorelement vor dem Einschieben des männlichen Steckteils in das weibliche Steckteil in der Wandung des weiblichen Steckteils fixiert und zwar insbesondere in der Wandung des weiblichen Steckteils verrastet, vorzugsweise lediglich leicht verrastet. Es versteht sich, dass die Fixierung bzw. Verrastung des Indikatorelementes in der Wandung des weiblichen Steckteils mit der Maßgabe realisiert ist, dass das Indikatorelement beim Einstecken des männlichen Steckteils erfindungsgemäß in radialer Richtung nach außen verschoben werden kann. Insoweit wird die Fixierung bzw. Verrastung des Indikatorelementes beim Einschieben des männlichen Steckteils in das weibliche Steckteil für die radiale Verschiebung des Indikatorelementes gleichsam gelöst.

Erfindungsgemäß gleitet das Indikatorelement beim Einstecken des männlichen Steckteils in das weibliche Steckteil über die Rampe und wird in radialer Richtung nach außen verschoben. Das Indikatorelement wird beim Gleiten über die Rampe durch die Indikatoröffnung des weiblichen Steckteils radial nach außen verschoben. Erfindungsgemäß erfolgt die radiale Verschiebung des Indikatorelementes bis eine radiale Außenposition des Indikatorelementes erreicht ist und diese radiale Außenposition des Indikatorelementes zeigt den ordnungsgemäß bzw. vollständig fixierten Zustand des männlichen Steckteils an dem weiblichen Steckteil an. Erfindungsgemäß ragt das Indikatorelement in seiner radialen Außenposition um einen Indikatorabschnitt radial nach außen vor. Das Indikatorelement ragt dabei um den Indikatorabschnitt aus der Indikatoröffnung des weiblichen Steckteils heraus. Diese Position bzw. radiale Außenposition des Indikatorelementes zeigt den ordnungsgemäß bzw. vollständig fixierten Zustand des männlichen Steckteils an dem weiblichen Steckteil an.

Es liegt im Übrigen im Rahmen der Erfindung, dass das in der radialen Außenposition befindliche Indikatorelement bei nicht eingestecktem männlichen Steckteil bzw. nach einer Entfernung des männlichen Steckteils aus dem weiblichen Steckteil wieder in seine Ausgangsposition zurückführbar bzw. zurückdrückbar ist. Zweckmäßigerweise kann das Indikatorelement dann in seinen in der Wandlung des weiblichen Steckteils fixierten bzw. verrasteten Zustand zurückgeführt bzw. zurückgedrückt werden.

Gemäß einer Ausführungsform der Erfindung ist ein Abschnitt des Rückhalters - insbesondere der U-Bügel des Rückhalters bzw. ein Abschnitt des U-Bügels des Rückhalters - im fixierten Zustand des männlichen Steckteils und bei radialer Außenposition des Indikatorelementes zwischen dem herausragenden Indikatorabschnitt des Indikatorelementes und zumindest einem aus der Außenoberfläche des weiblichen Steckteils herausragenden Flanschsegment angeordnet. Auf diese Weise kann der Rückhalter zusätzlich in seiner Position stabilisiert bzw. fixiert werden.

Nach einer Ausführungsform der Erfindung sind zumindest zwei und vorzugsweise zwei Indikatorelemente vorhanden. Zweckmäßigerweise sind die beiden Indikatorelemente an dem weiblichen Steckteil vorgesehen und sie durchgreifen vorzugsweise jeweils eine Indikatoröffnung in der Wandung des weiblichen Steckteils. Es liegt im Rahmen der Erfindung, dass für die zumindest zwei bzw. für die beiden Indikatorelemente alle vorstehend zu dem Indikatorelement beschriebenen Ausführungsformen alternativ, in Teilkombination oder in Kombination verwirklicht sein können.

Erfindungsgemäß weist ein Indikatorelement zumindest zwei und vorzugsweise zwei Indikatorfüße auf, mit denen das Indikatorelement auf der ansteigenden Rampe gleitet. Die Indikatorfüße bzw. die beiden Indikatorfüße sind jeweils an einem Indikatorschenkel des Indikatorelementes angeschlossen. Zweckmäßigerweise sind die beiden Indikatorschenkel parallel bzw. im Wesentlichen parallel zueinander angeordnet. Empfohlenermaßen sind die Indikatorschenkel an einer Indikatorbasis des Indikatorelementes angeschlossen, wobei die Indikatorbasis bevorzugt den Indikatorabschnitt aufweist bzw. den Indikatorabschnitt bildet, der in der radialen Außenposition des Indikatorelementes den vollständig bzw. ordnungsgemäß verbundenen Zustand des männlichen Steckteils anzeigt.

Erfindungsgemäß sind die Indikatorschenkel federnd an der Indikatorbasis angeschlossen, so dass die Indikatorschenkel durch Krafteinwirkung aufeinander zu bzw. voneinander wegbewegt werden können. Zweckmäßigerweise ist an zumindest einem Indikatorschenkel und bevorzugt an beiden Indikatorschenkeln (jeweils) eine Rastelement angeschlossen. Über dieses Rastelement bzw. über diese Rastelemente kann das Indikatorelement im noch nicht eingeschobenen Zustand des männlichen Steckteils in der Wandung des weiblichen Steckteils gehalten bzw. verrastet sein. Beim Einschieben des männlichen Steckteils kann dann insbesondere aufgrund der vorzugsweise vorgesehenen federnden Ausbildung der Indikatorschenkel die Verrastung gelöst werden und dass Indikatorelement radial nach außen verschoben werden.

Gemäß einer Ausgestaltung der Erfindung ist ein Indikatorfuß des Indikatorelementes entsprechend dem Anstiegswinkel der Rampe abgeschrägt ausgebildet.

Der Erfindung liegt die Erkenntnis zugrunde, dass mit dem erfindungsgemäßen Verbinder ein ordnungsgemäß bzw. vollständig fixierter Zustand des männlichen Steckteils an dem weiblichen Steckteil eindeutig und funktionssicher angezeigt werden kann. Dazu dient das erfindungsgemäße Indikatorelement, das im Übrigen nach einer empfohlenen Ausführungsform der Erfindung eine spezielle Farbe aufweisen kann, die sich von der Farbe der übrigen Komponenten des Verbinders und insbesondere von der Farbe des weiblichen Steckteils unterscheidet. Die Anzeige des ordnungsgemäß bzw. vollständig fixierten Zustandes des männlichen Steckteils ist frei von Störungen oder Zwängen möglich. Hervorzuheben ist weiterhin, dass sich die erfindungsgemäßen Indikations- bzw. Detektionsmaßnahmen auf sehr einfache und wenig aufwändige Weise realisieren lassen. Vor allem muss die Bauweise bzw. Bauform der bislang bekannten Verbinder nicht wesentlich verändert werden. Von daher sind die erfindungsgemäßen Maßnahmen mit einem geringen Fertigungsaufwand und geringen Fertigungskosten verbunden. Auch ist der Materialaufwand zur Verwirklichung der erfindungsgemäßen Indikationsmaßnahmen relativ gering. Die Realisierung der erfindungsgemäßen Maßnahmen ist vor allem auch im Einklang mit den einschlägigen Normen für derartige Verbinder. Zu erwähnen ist weiterhin, dass das erfindungsgemäße Indikatorelement zusätzlich auch als Informationsträger für Barcodes oder dergleichen verwendet werden kann.

Nachfolgend wird die Erfindung anhand einer lediglich ein Ausführungsbeispiel darstellenden Zeichnung näher erläutert. Es zeigen in schematischer Darstellung:

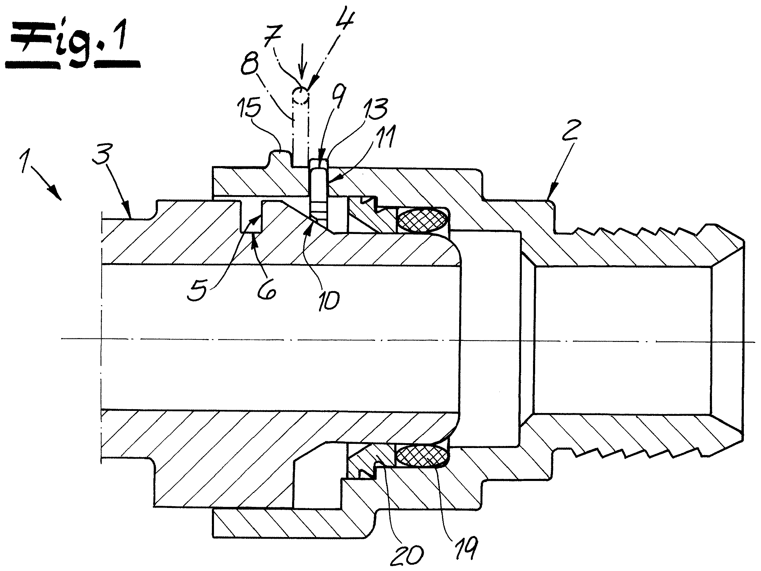

- Fig. 1: Einen Längsschnitt durch den erfindungsgemäßen Verbinder in einer ersten Funktionsstellung,
- Fig. 2: den Gegenstand gemäß Figur 1 in einer zweiten Funktionsstellung,
- Fig. 3: einen Querschnitt durch den Verbinder in der ersten Funktionsstellung nach Figur 1 im Bereich des Indikatorelementes,
- Fig. 4: den Gegenstand gemäß Figur 3 in der zweiten Funktionsstellung und
- Fig. 5: eine perspektivische Ansicht des weiblichen Steckteils des Verbinders mit aufgenommenem Rückhalter.

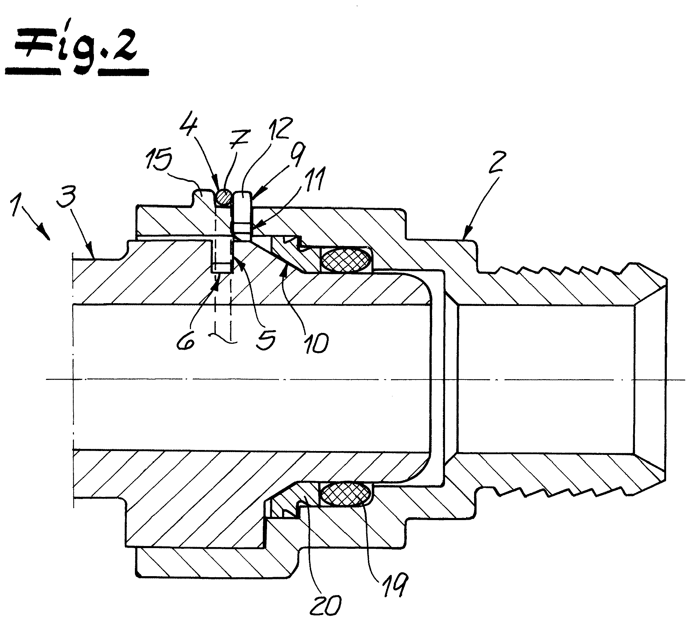

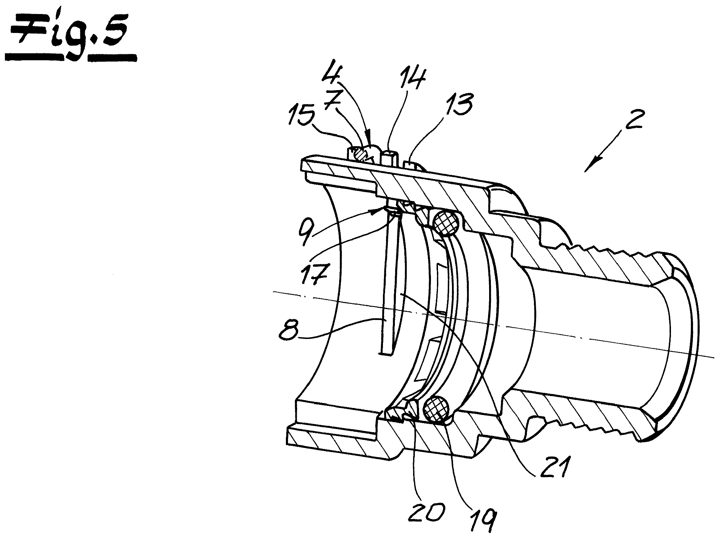

Die Figuren zeigen einen Verbinder 1 zum Verbinden zweier fluidführender Elemente, insbesondere zum Verbinden von zwei im Ausführungsbeispiel nicht näher dargestellten Kraftfahrzeugrohrleitungen. Der Verbinder 1 weist ein weibliches Steckteil 2 und ein in das weibliche Steckteil 2 einsteckbares männliches Steckteil 3 auf. Bei dem in den Figuren dargestellten Verbinder handelt es sich gemäß bevorzugter Ausführungsform um einen sogenannten VDA-Verbinder. - Das männliche Steckteil 3 ist in seinem in das weibliche Steckteil 2 vollständig eingesteckten Zustand über ein Fixierelement an dem weiblichen Steckteil 2 fixiert. Bei dem Fixierelement handelt es sich bevorzugt und im Ausführungsbeispiel um einen U-förmigen Rückhalter 4 der zweckmäßigerweise an dem weiblichen Steckteil 2 angeschlossen ist und zwei gegenüberliegende schlitzförmige Ausnehmungen 21 des weiblichen Steckteils 2 durchgreift (Fig. 5). Bevorzugt und im Ausführungsbeispiel hintergreift der Rückhalter 4 im vollständig bzw. ordnungsgemäß eingesteckten Zustand des männlichen Steckteils 3 einen Anschlagflansch 5 des männlichen Steckteils 3. Vorzugsweise und im Ausführungsbeispiel greift der Rückhalter 4 dabei in eine Fixierungsnut 6 des männlichen Steckteils 3 ein (Figur 2). Empfohlenermaßen und im Ausführungsbeispiel nach den Figuren ist der U-förmige Rückhalter 4 mit einem U-Bügel 7 und zwei an dem U-Bügel 7 angeschlossenen U-Schenkeln 8 ausgestattet. Bevorzugt durchgreift jeder U-Schenkel 8 eine der beiden gegenüberliegenden schlitzförmigen Ausnehmungen 21 des weiblichen Steckteils 2 (Fig. 5). Zweckmäßigerweise und im Ausführungsbeispiel hintergreifen die beiden U-Schenkel 8 im vollständig fixierten Zustand des männlichen Steckteils 3 den Anschlagflansch 5 des männlichen Steckteils 3 und fassen in eine Fixierungsnut 6 des männlichen Steckteils 3 ein.

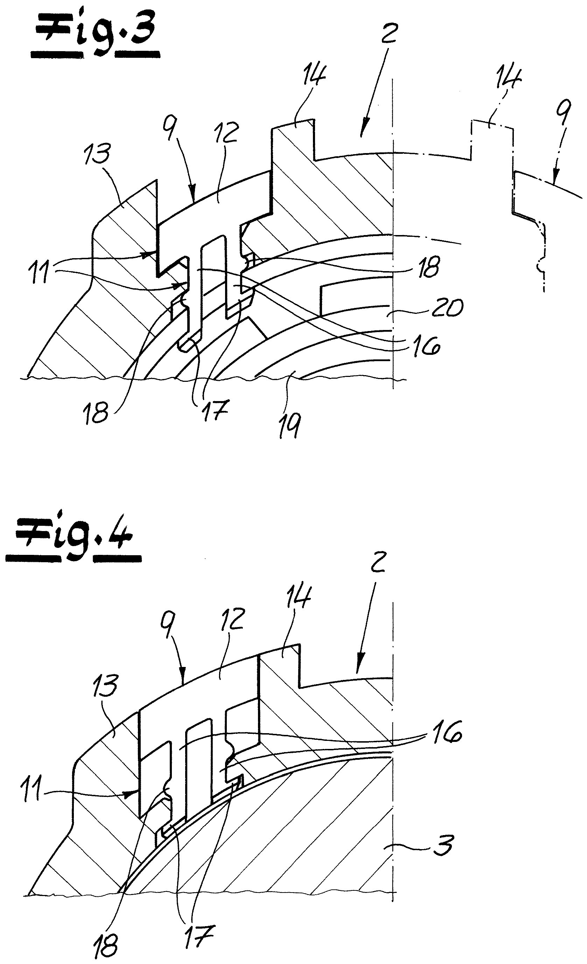

Erfindungsgemäß ist ein Indikatorelement 9 vorgesehen, das den über das Fixierelement bzw. über den Rückhalter 4 erreichten ordnungsgemäß bzw. vollständig fixierten Zustand des männlichen Steckteils 3 an dem weiblichen Steckteil 2 anzeigt. Das Indikatorelement 9 gleitet beim Einstecken des männlichen Steckteils 3 in das weibliche Steckteil 2 über eine Rampe 10. Dabei wird es in radialer Richtung nach außen verschoben und schließlich zeigt eine radiale Außenposition des Indikatorelementes 9 den ordnungsgemäß fixierten Zustand des männlichen Steckteils 3 an dem weiblichen Steckteil 2 an (Figuren 2 und 4).

Erfindungsgemäß ist die Rampe 10 an der Außenoberfläche des männlichen Steckteils 3 vorgesehen und die Rampe 10 ist empfohlenermaßen einstückig an dem männlichen Steckteil 3 angeformt. Erfindungsgemäß steigt die Rampe 10 in axialer Richtung des weiblichen Steckteils 2 bzw. in axialer Richtung des männlichen Steckteils 3 an und zwar vorzugsweise und im Ausführungsbeispiel entgegen der Einsteckrichtung des männlichen Steckteils 3. Es liegt im Rahmen der Erfindung, dass die Rampe 10 kontinuierlich und stufenfrei ansteigt und vorzugsweise um 15° bis 45° ansteigt. Im Ausführungsbeispiel steigt die Rampe 10 um etwa 25° an. Zweckmäßigerweise und im Ausführungsbeispiel läuft die Rampe 10 über den gesamten Umfang des männlichen Steckteils 3 um.

Die Figuren zeigen eine besonders bevorzugte Ausführungsformen der Erfindung, bei der die Rampe 10 auch den Anschlagflansch 5 für den Rückhalter 4 bildet bzw. aufweist. Im vollständig bzw. ordnungsgemäß eingesteckten Zustand des männlichen Steckteils 3 in das weibliche Steckteil 2 hintergreifen vorzugsweise und im Ausführungsbeispiel die U-Schenkel 8 des Rückhalters 4 den Anschlagflansch 5 der Rampe 10, die zugleich für das radiale Verschieben des Indikatorelementes 9 verantwortlich ist.

Es liegt im Rahmen der Erfindung, dass das Indikatorelement 9 an dem weiblichen Steckteil 2 vorgesehen ist und vorzugsweise und im Ausführungsbeispiel eine Indikatoröffnung 11 in der Wandung des weiblichen Steckteils 2 durchgreift. Erfindungsgemäß wird das Indikatorelement 9 beim Gleiten über die Rampe 10 durch die Indikatoröffnung 11 des weiblichen Steckteils 2 radial nach außen verschoben. Das Indikatorelement 9 ragt in seiner radialen Außenposition um einen Indikatorabschnitt 12 nach außen vor (siehe Figuren 2 und 4). Das Indikatorelement 9 ragt um den Indikatorabschnitt 12 aus der Indikatoröffnung 11 heraus.

Bevorzugt und im Ausführungsbeispiel geht die Verbindung des männlichen Steckteils 3 mit dem weiblichen Steckteil 2 wie folgt vonstatten: Beim Einschieben des männlichen Steckteils 3 in das weibliche Steckteil 2 werden zunächst die beiden U-Schenkel 8 des Rückhalters 4 (Figur 5) von der Rampe 10 des männlichen Steckteils 3 nach außen gedrückt. Gleichzeitig geleitet das Indikatorelement 9 über die Rampe 10 und wird dabei radial nach außen verschoben. Schließlich hintergreifen die U-Schenkel 8 den Anschlagflansch 5 der Rampe 10 und fassen dabei vorzugsweise in die Fixierungsnut 6 ein. In diesem ordnungsgemäß bzw. vollständig fixierten Zustand des männlichen Steckteils 3 an dem weiblichen Steckteil 2 befindet sich das Indikatorelement 9 in seiner radialen Außenposition und zweckmäßigerweise ragt dabei das Indikatorelement 9 mit seinem Indikatorabschnitt 12 durch die Indikatoröffnung 11 des weiblichen Steckteils 2 (Figuren 2 und 4).

Vorzugsweise und im Ausführungsbeispiel (siehe insbesondere Figuren 3 und 4) wird der Indikatorabschnitt 12 bei der radialen Verschiebung des Indikatorelementes 9 von zwei in Umfangsrichtung des weiblichen Steckteils 2 neben dem Indikatorabschnitt 12 angeordneten Führungsnasen 13, 14 geführt. Dabei ist der Indikatorabschnitt 12 zweckmäßigerweise formschlüssig zwischen den beiden Führungsnasen 13, 14 aufgenommen. Bevorzugt und im Ausführungsbeispiel schließt die Oberfläche des Indikatorelementes 9 bzw. des Indikatorabschnitte 12 in der radialen Außenposition des Indikatorelementes 9 bündig an die Oberflächen der Führungsnasen 13, 14 an (Figur 4).

Gemäß empfohlener Ausführungsformen der Erfindung und im Ausführungsbeispiel ist ein Abschnitt des U-Bügels 7 des U-förmigen Rückhalters 4 im fixierten Zustand des männlichen Steckteils 3 bzw. bei radialer Außenposition des Indikatorelementes 9 zwischen dem herausragenden Indikatorabschnittes 12 des Indikatorelementes 9 und einem aus der Oberfläche des weiblichen Steckteils herausragenden Flanschsegment 15 angeordnet. Es liegt im Rahmen der Erfindung, dass das Flanschsegment 15 einstückig an das weibliche Steckteil 2 angeformt ist. Weiterhin liegt es im Rahmen der Erfindung, dass die Führungsnasen 13, 14 einstückig an das weibliche Steckteil 2 angeformt sind.

Eine bevorzugte Ausführungsform der Erfindung ist dadurch gekennzeichnet, dass zwei Indikatorelemente 9 vorhanden sind, die zweckmäßigerweise in Umfangsrichtung des weiblichen Steckteils 2 nebeneinander angeordnet sind. Vorzugsweise durchgreift jedes der beiden Indikatorelemente 9 eine Indikatoröffnung 11 in der Wandung des weiblichen Steckteils 2.

Erfindungsgemäß weist ein Indikatorelement 9 zwei vorzugsweise zueinander parallele Indikatorschenkel 16 auf, wobei am unteren Ende jedes Indikatorschenkels 16 ein Indikatorfuß 17 angeschlossen ist. Die beiden Indikatorschenkel 16 münden an ihrer Oberseite in den Indikatorabschnitt 12 des Indikatorelementes 9. Vorzugsweise und im Ausführungsbeispiel ist an jedem Indikatorschenkel 16 des Indikatorelementes 9 ein Rastnocken 18 vorgesehen, über den der jeweilige Indikatorschenkel 16 im noch nicht fixierten Zustand des männlichen Steckteils 3 in der Wandung des weiblichen Steckteils 2 (leicht) verrastet ist. Beim Einschieben des männlichen Steckteils 3 in das weibliche Steckteil 2 und bei Einwirkung der Rampe 10 auf das Indikatorelement 9 wird das Indikatorelementes aus der Verrastung an dem weiblichen Steckteil 2 gelöst und erfindungsgemäß radial nach außen verschoben. - Es liegt im Übrigen im Rahmen der Erfindung, dass die Indikatorfüße 17 eines Indikatorelementes 9 entsprechend dem Anstiegswinkel der Rampe 10 abgeschrägt ausgebildet sind.

In den Figuren ist außerdem erkennbar, dass nach bevorzugter Ausführungsform in dem weiblichen Steckteil 2 in an sich üblicher Weise ein Dichtungsring 19 angeordnet ist, der bevorzugt und im Ausführungsbeispiel von einem Distanzring 20 in dem weiblichen Steckteil 2 gehalten wird.

## Patentansprüche

1. Verbinder (1) zum Verbinden zweier fluidführender Elemente, insbesondere zum Verbinden von zwei Kraftfahrzeugrohrleitungen, - mit einem weiblichen Steckteil (2) und einem in das weibliche Steckteil (2) einsteckbaren männlichen Steckteil (3), wobei das männliche Steckteil (3) über zumindest einen an dem weiblichen Steckteil (2) angeschlossenen Rückhalter (4) im eingesteckten Zustand an dem weiblichen Steckteil (2) fixierbar ist, wobei zumindest ein Indikatorelement (9) vorgesehen ist, das den über das Fixierelement erreichten ordnungsgemäß bzw. vollständig fixierten Zustand des männlichen Steckteils (3) an dem weiblichen Steckteil (2) anzeigt,
wobei das Indikatorelement (9) beim Einstecken des männlichen Steckteils (3) in das weibliche Steckteil (2) über eine an der Außenoberfläche des männlichen Steckteils (3) vorgesehene und in axialer Richtung des männlichen Steckteils (3) ansteigende Rampe (10) gleitet und dabei in radialer Richtung nach außen verschoben wird, wobei das Indikatorelement (9) in seiner radialen Außenposition um einen Indikatorabschnitt (12) aus einer Indikatoröffnung (11) des weiblichen Steckteils (2) herausragt, wobei die radiale Außenposition des Indikatorelementes (9) bzw. der aus der Indikatoröffnung (11) des weiblichen Steckteils (2) herausragende Indikatorabschnitt (12) den ordnungsgemäß fixierten Zustand des männlichen Steckteils (3) an dem weiblichen Steckteil (2) anzeigt
und wobei ein Indikatorelement (9) zumindest zwei und vorzugsweise zwei Indikatorfüße (17) aufweist, mit denen das Indikatorelement (9) auf der ansteigenden Rampe (10) gleitet, wobei die beiden Indikatorfüße (17) jeweils an einem Indikatorschenkel (16) des Indikatorelementes (9) angeschlossen sind und wobei die Indikatorschenkel (16) federnd an einer Indikatorbasis angeschlossen sind, so dass die Indikatorschenkel (16) durch Krafteinwirkung aufeinander zu bzw. voneinander weg bewegt werden können.

2. Verbinder nach Anspruch 1, wobei der Rückhalter (4) im vollständig eingesteckten bzw. fixierten Zustand des männlichen Steckteils (3) einen Anschlagflansch (5) des männlichen Steckteils (3) hintergreift und insbesondere in eine Fixierungsnut (6) des männlichen Steckteils (3) einfasst.

3. Verbinder nach Anspruch 2, wobei der Rückhalter (4) U-förmig mit einem U-Bügel (7) und zwei an dem U-Bügel (7) angeschlossenen U-Schenkeln (8) ausgebildet ist und wobei zweckmäßigerweise die U-Schenkel (8) im fixierten Zustand des männlichen Steckteils (3) an dem weiblichen Steckteil (2) den Anschlagflansch (5) des männlichen Steckteils (3) hintergreifen und insbesondere in eine Fixierungsnut (6) des männlichen Steckteils (3) eingreifen.

4. Verbinder nach einem der Ansprüche 1 bis 3, wobei die Rampe (10) einstückig an dem männlichen Steckteil (3) angeformt ist.

5. Verbinder nach einem der Ansprüche 1 bis 4, wobei die Rampe(10) entgegen der Einsteckrichtung des männlichen Steckteils (3) ansteigt.

6. Verbinder nach einem der Ansprüche 1 bis 5, wobei die Rampe (10) kontinuierlich und insbesondere stufenfrei ansteigt und vorzugsweise um 15° bis 45°Grad ansteigt.

7. Verbinder nach einem der Ansprüche 1 bis 6, wobei die Rampe (10) um zumindest 50 % des Umfanges des männlichen Steckteils (3) umläuft und vorzugsweise vollständig über den Umfang des männlichen Steckteils (3) um läuft.

8. Verbinder nach einem der Ansprüche 1 bis 7, wobei die Rampe (10) den Anschlagflansch (5) für den Rückhalter (4) aufweist bzw. bildet.

9. Verbinder nach einem der Ansprüche 1 bis 8, wobei das Indikatorelement (9) an dem weiblichen Steckteil (2) vorgesehen ist und eine Indikatoröffnung (11) in der Wandung des weiblichen Steckteils (2) durchgreift.

10. Verbinder nach Anspruch 9, wobei das Indikatorelement (9) beim Gleiten über die Rampe (10) durch die Indikatoröffnung (11) des weiblichen Steckteils (2) radial nach außen verschiebbar ist.

11. Verbinder nach einem der Ansprüche 1 bis 10, wobei ein Abschnitt des Rückhalters (4) in dem fixierten Zustand des männlichen Steckteils (3) und bei radialer Außenposition des Indikatorelementes (9) zwischen dem herausragenden Indikatorabschnitt (12) des Indikatorelementes (9) und einem aus der Außenoberfläche des weiblichen Steckteils (2) herausragenden Flanschsegment (15) angeordnet ist.

12. Verbinder nach einem der Ansprüche 1 bis 11, wobei zumindest zwei und vorzugsweise zwei Indikatorelemente (9) vorhanden sind und zweckmäßigerweise an dem weiblichen Steckteil (2) vorgesehen sind und insbesondere jeweils eine Indikatoröffnung (11) in der Wandung des weiblichen Steckteils (2) durchgreifen.

13. Verbinder nach einem der Ansprüche 1 bis 12, wobei ein Indikatorelement (9) zumindest einen Indikatorfuß (17) aufweist, mit dem das Indikatorelement (9) auf der ansteigenden Rampe (10) gleitet.

14. Verbinder nach Anspruch 13, wobei ein Indikatorfuß (17) des Indikatorelementes (9) entsprechend dem Anstiegswinkel der Rampe (10) abgeschrägt ausgebildet ist.

## Claims

1. A connector (1) for connecting two fluid-carrying elements, in particular for connecting two motor vehicle pipelines, with a female plug part (2) and a male plug part (3) that can be inserted into the female plug part (2), wherein the male plug part (3) can be fixed to the female plug part (2) in the inserted state via at least one retainer (4) connected to the female plug part (2), wherein at least one indicator element (9) is provided, which displays the properly or completely fixed state of the male plug part (3) on the female plug part (2) achieved via the fixing element, wherein, during insertion of the male plug part (3) into the female plug part (2), the indicator element (9) glides over a ramp (10) that is provided on the outer surface of the male plug part (3) and rises in an axial direction of the male plug part (3), and in the process is outwardly displaced in a radial direction, wherein the indicator element (9) in its radial outer position around an indicator section (12) protrudes from an indicator opening (11) of the female plug part (2), wherein the radial outer position of the indicator element (9) or the indicator section (12) protruding from the indicator opening (11) of the female plug part (2) indicates the properly fixed state of the male plug part (3) on the female plug part (2),
and wherein an indicator element (9) has at least two, and preferably two, indicator feet (17), with which the indicator element (9) glides on the rising ramp (10), wherein the two indicator feet (17) each are connected to an indicator leg (16) of the indicator element (9), and wherein the indicator legs (16) are spring connected to an indicator base, so that the indicator legs (16) can be moved toward or away from each other through exposure to force.

2. The connector according to claim 1, wherein, in the completely inserted or fixed state of the male plug part (3), the retainer (4) engages behind a stop flange (5) of the male plug part (3), and in particular engages into a fixation groove (6) of the male plug part (3).

3. The connector according to claim 2, wherein the retainer (4) has a U-shaped design with a U-bracket (7) and two U-legs (8) connected to the U-bracket (7), wherein, in the fixed state of the male plug part (3) to the female plug part (2), the U-legs (8) expediently engage behind the stop flange (5) of the male plug part (3), and in particular engage into a fixation groove (6) of the male plug part (3).

4. The connector according to one of claims 1 to 3, wherein the ramp (10) is formed in one piece on the male plug part (3).

5. The connector according to one of claims 1 to 4, wherein the ramp (10) rises opposite the insertion direction of the male plug part (3).

6. The connector according to one of claims 1 to 5, wherein the ramp (10) rises continuously, and in particular without steps, and preferably by 15° to 45°.

7. The connector according to one of claims 1 to 6, wherein the ramp (10) runs around at least 50% of the periphery of the male plug part (3), and preferably runs around the entire periphery of the male plug part (3).

8. The connector according to one of claims 1 to 7, wherein the ramp (10) has or forms the stop flange (5) for the retainer (4).

9. The connector according to one of claims 1 to 8, wherein the indicator element (9) is provided on the female plug part (2), and engages through an indicator opening (11) in the wall of the female plug part (2).

10. The connector according to claim 9, wherein, while gliding over the ramp (10), the indicator element (9) can be displaced radially outward through the indicator opening (11) of the female plug part (2).

11. The connector according to one of claims 1 to 10, wherein, in the fixed state of the male plug part (3) and in the radial outer position of the indicator element (9), a section of the retainer (4) is arranged between the protruding indicator section (12) of the indicator element (9) and a flange segment (15) protruding from the outer surface of the female plug part (2).

12. The connector according to one of claims 1 to 11, wherein at least two, and preferably two, indicator elements (9) are present, and expediently provided on the female plug part (2), and in particular each engage through an indicator opening (11) in the wall of the female plug part (2).

13. The connector according to one of claims 1 to 12, wherein an indicator element (9) has at least one indicator foot (17), with which the indicator element (9) glides on the rising ramp (10).

14. The connector according to claim 13, wherein an indicator foot (17) of the indicator element (9) has a slanted design based on the rise angle of the ramp (10).

## Revendications

1. Raccord (1) pour relier deux éléments conducteurs de fluide, en particulier pour relier deux conduits de véhicule automobile, avec une partie insérable femelle (2) et une partie insérable mâle (3) insérable dans la partie insérable femelle (2), sachant que la partie insérable mâle (3) peut être fixée par au moins un élément de retenue (4) raccordé à la partie insérable femelle (2) à l'état inséré à la la partie insérable femelle (2), sachant qu'au moins un élément indicateur (9) est prévu, qui indique l'état conformément ou complètement fixé atteint par l'élément de fixation de la partie insérable mâle (3) sur la partie insérable femelle (2),
sachant que l'élément indicateur (9) coulisse lors de l'insertion de la partie insérable mâle (3) dans la partie insérable femelle (2) sur une rampe (10) prévue à la surface extérieure de la partie insérable mâle (3) et augmentant en direction axiale de la partie insérable mâle (3) et est déplacé à cet effet vers l'extérieur en direction radiale, sachant que l'élément indicateur (9) dans sa position extérieure radiale dépasse d'une section d'indicateur (12) d'une ouverture d'indicateur (11) de la partie insérable femelle (2), sachant que la position extérieure radiale de l'élément indicateur (9) ou de la section d'indicateur (12) dépassant de l'ouverture d'indicateur (11) de la partie insérable femelle (2) indique l'état conformément fixé de la partie insérable mâle (3) à la partie insérable femelle (2),
et sachant qu'un élément indicateur (9) comporte au moins et de préférence deux pieds d'indicateur (17) avec lesquels l'élément indicateur (9) coulisse sur la rampe croissante (10), sachant que les deux pieds d'indicateur (17) sont respectivement raccordés à une branche d'indicateur (16) de l'élément indicateur (9) et sachant que les branches d'indicateur (16) sont raccordées faisant ressort à une base d'indicateur de telle manière que les branches d'indicateur (16) peuvent être déplacées l'une au-dessus de l'autre en rapprochement ou en éloignement.

2. Raccord selon la revendication 1, sachant que l'élément de retenue (4) à l'état complètement inséré ou fixé de la partie insérable mâle (3) vient en prise par l'arrière avec une bride de butée (5) de la partie insérable mâle (3) et monte en particulier dans une rainure de fixation (6) de la partie insérable mâle (3) .

3. Raccord selon la revendication 2, sachant que l'élément de retenue (4) est constitué en forme de U avec un étrier en U (7) et de deux branches en U (8) raccordées à l'étrier en U (7) et sachant que les branches en U (8) à l'état fixé de la partie insérable mâle (3) à la partie insérable femelle (2) viennent saisir judicieusement par l'arrière la bride de butée (5) de la partie insérable mâle (3) et viennent en prise en particulier dans une rainure de fixation (6) de la partie insérable mâle (3).

4. Raccord selon l'une quelconque des revendications 1 à 3, sachant que la rampe (10) est conformée en une seule pièce sur la partie insérable mâle (3).

5. Raccord selon l'une quelconque des revendications 1 à 4, sachant que la rampe (10) augmente à l'opposé de la direction d'insertion de la partie insérable mâle (3).

6. Raccord selon l'une quelconque des revendications 1 à 5, sachant que la rampe (10) augmente en continu et en particulier sans palier et de préférence de 15° à 45° degrés.

7. Raccord selon l'une quelconque des revendications 1 à 6, sachant que la rampe (10) passe autour sur au moins 50 % de la périphérie de la partie insérable mâle (3) et passe de préférence complètement autour sur la périphérie de la partie insérable mâle (3).

8. Raccord selon l'une quelconque des revendications 1 à 7, sachant que la rampe (10) comporte ou forme la bride de butée (5) pour l'élément de retenue (4).

9. Raccord selon l'une quelconque des revendications 1 à 8, sachant que l'élément indicateur (9) est prévu sur la partie insérable femelle (2) et une ouverture d'indicateur (11) passe à travers la paroi de la partie insérable femelle (2).

10. Raccord selon la revendication 9, sachant que l'élément indicateur (9) peut être déplacé radialement vers l'extérieur sur la rampe (10) à travers l'ouverture d'indicateur (11) de la partie insérable femelle (2).

11. Raccord selon l'une quelconque des revendications 1 à 10, sachant qu'une section de l'élément de retenue (4) est disposé à l'état fixé de la partie insérable mâle (3) et à la position extérieure radiale de l'élément indicateur (9) entre la section d'indicateur (12) dépassant de l'élément indicateur (9) et un segment de bride (15) dépassant de la surface extérieure de la partie insérable femelle (2).

12. Raccord selon l'une quelconque des revendications 1 à 11, sachant qu'au moins deux et de préférence deux éléments indicateurs (9) sont présents et sont judicieusement prévus sur la partie insérable femelle (2) et passent en particulier respectivement à travers une ouverture d'indicateur (11) dans la paroi de la partie insérable femelle (2).

13. Raccord selon l'une quelconque des revendications 1 à 12, sachant qu'un élément indicateur (9) comporte au moins un pied d'indicateur (17) avec lequel l'élément indicateur (9) coulisse sur la rampe croissante (10).

14. Raccord selon la revendication 13, sachant qu'un pied d'indicateur (17) de l'élément indicateur (9) est constitué en biseau conformément à l'angle de croissance de la rampe (10).
